# EUROPÄISCHE PATENTANMELDUNG

(11) **EP 1 479 425 A1**
(43) Veröffentlichungstag der Anmeldung: **24.11.2004**
(21) Anmeldenummer: 04005892.7
(22) Anmeldetag: 12.03.2004
(51) Int. Cl.: B01D 19/00, D21D 5/24, D21D 5/26

(54) **Anlage zur Reinigung und Entgasung einer Faserstoffsuspension**

(30) Priorität: 20.05.2003 DE 10322572
(71) Anmelder: Voith Paper Patent GmbH, 89522 Heidenheim (DE)
(72) Erfinder: Mannes, Wolfgang, 88213 Bavendorf (DE)

(57) **Zusammenfassung**

Die Anlage dient zur Reinigung und Entgasung einer Faserstoffsuspension (S) unter Verwendung von einer Vielzahl von Hydrozyklonen (1). Die Gutstoffanschlüsse (3) der Hydrozyklone münden in verschiedene Sammelleitungen (5), an deren Unterseite jeweils ein Gutstoffableitungsrohr (6) angeschlossen ist. Auf diese Weise lässt sich eine Hydrozyklonanlage relativ kompakt aufbauen, und gleichzeitig wird die Gefahr von hydraulischen Impulsen nachhaltig reduziert.

## Beschreibung

Die Erfindung betrifft eine Anlage mit mehreren Hydrozyklonen gemäß dem Oberbegriff des Anspruchs 1.

Bekanntlich werden Hydrozyklone verwendet, um Flüssigkeiten, in denen sich Stoffe von unterschiedlichem Sinkverhalten befinden, durch starke Zentrifugalkräfte zu fraktionieren. So ist es z.B. möglich, die in einer Faserstoffsuspension, wie sie zur Erzeugung von Papier verwendet wird, enthaltenen Störstoffe aufzukonzentrieren und durch einen Rejektanschluss aus dem Hydrozyklon abzuleiten. Die von Störstoffen befreite Fraktion, nämlich der Gutstoff, wird durch den Gutstoffanschluss abgeführt und weiter verwendet. Hydrozyklonanlagen haben außerdem oft auch den Zweck, zumindest einen großen Teil der in der Flüssigkeit enthaltenen Gase, z.B. die Luft, ebenfalls zu entfernen. Dazu wird der Gutstoff nach Verlassen des Hydrozyklons unter Unterdruck gesetzt, so dass die Gase austreten und separat abgeführt werden können. Diese Vorgänge sind an sich bekannt, ebenso die Tatsache, dass ein guter Effekt nur gewährleistet ist, wenn die Hydrozyklone eine bestimmte Größe nicht überschreiten. Bei einer Hydrozyklonanlage, die - wie in Papierfabriken üblich - für größere Durchsatzmengen ausgelegt ist, wird daher eine Mehrzahl - oft sogar eine Vielzahl - von Hydrozyklonen benötigt. Diese werden dann parallel von der zu reinigenden Flüssigkeit durchströmt, was bedeutet, dass der Flüssigkeitsstrom in eine Vielzahl von kleineren Teilströmen aufgeteilt werden muss. Hierzu können z.B. Verteilvorrichtungen, wie sie im Folgenden noch beschrieben werden, verwendet werden.

Aus der DE 41 06 140 A1 ist eine Anlage bekannt, bei der die Gutstoffe einer Vielzahl von Hydrozyklonen zusammengeführt und in eine Entlüftungskammer geleitet werden. In dieser werden sie durch eine Lochplatte aufgeteilt und gelangen dann in ein unter Unterdruck gehaltenes Entgasungsvolumen. Die Anlage ist an sich recht wirksam, erfordert aber einen hohen apparativen Aufwand.

In anderen Fällen münden die Rohrleitungen, die den Gutstoff aus den Hydrozyklonen ausleiten, in eine Gutstoffleitung, an die der Unterdruck angelegt wird. Diese Gutstoffleitung ist an einen ebenfalls unter Unterdruck stehenden, relativ großen Entgasungsbehälter angeschlossen. Ein solcher enthält sowohl eine Flüssigkeits- als auch eine Gasphase. Beispiele hierfür zeigen die US 4,443,232 A, die US 5,236,475 A, die EP 1 273 697 A sowie die DE 17 61 496. Diese Anlagen sind insbesondere wegen des großen Entgasungsbehälters aufwändig und benötigen viel Platz.

Der Erfindung liegt daher die Aufgabe zu Grunde, Anlagen der genannten Art so zu gestalten, dass sie auch bei einer großen Anzahl von Hydrozyklonen platzsparend aufgebaut und weniger aufwändig als bekannte Lösungen sind. Störende hydraulische Impulse in der dem Stoffauflauf zugeführten Suspension sollen vermieden werden.

Diese Aufgabe wird durch die im Kennzeichen des Anspruchs 1 genannten Maßnahmen gelöst.

Die Erfindung und ihre Vorteile werden beschrieben und erläutert an Hand von Zeichnungen. Dabei zeigen:
- Fig. 1: einen Teil einer erfindungsgemäßen Hydrozyklonanlage, teils geschnitten, in Ansicht von vorne;
- Fig. 2: eine Variante zur in Fig. 1 gezeigten Anlage;
- Fig. 3: Ansicht von oben auf einen Teil einer erfindungsgemäßen Hydrozyklonanlage;
- Fig. 4: eine Variante mit Gutstoffzusammenführung auf höherer Ebene.

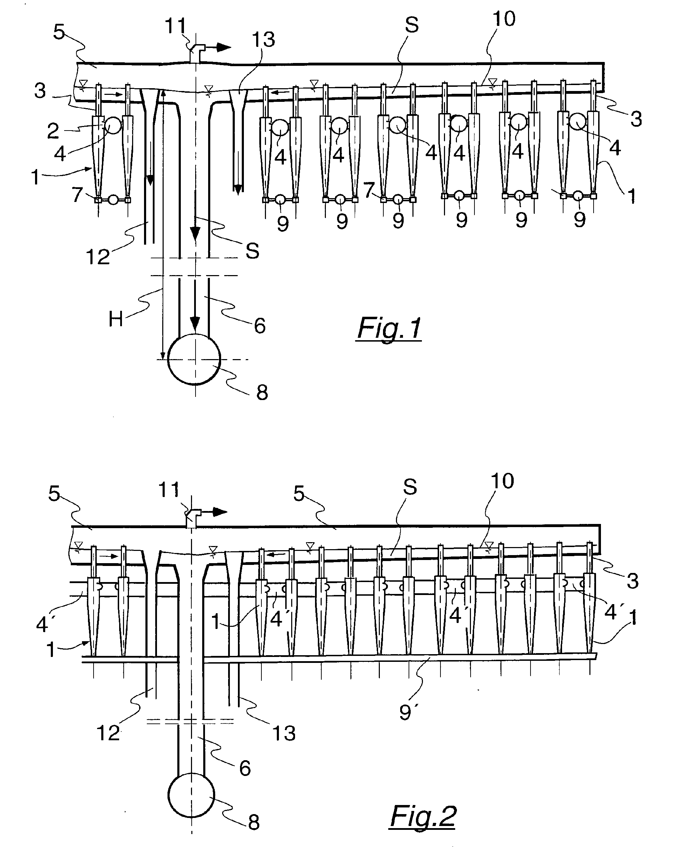

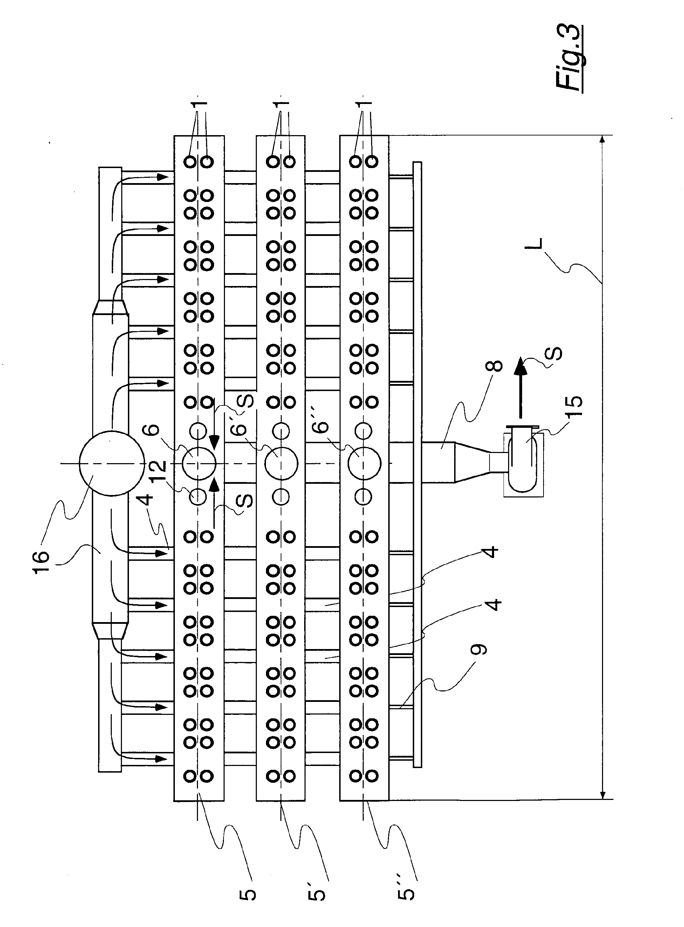

Die in der Fig. 1 nur teilweise gezeigte erfindungsgemäße Anlage erhält eine größere Anzahl von Hydrozyklonen 1 mit jeweils einem Zulaufanschluss 2, einem Gutstoffanschluss 3 und einem Rejektanschluss 7 für die ausgeschiedenen Schwerteile. In der Regel sind die Hydrozyklone 1, die bei einer solchen Anlage verwendet werden, untereinander gleich. Die Gutstoffanschlüsse 3 der Hydrozyklone 1 münden von unten in eine Gutstoffleitung 5. Diese ist als etwa waagerechte Rohrleitung ausgeführt, in deren axialer Mitte unten ein abwärts führendes Gutstoffableitungsrohr 6 angeschlossen ist. Die Faserstoffsuspension S bildet in der Gutstoffleitung 5 eine Grenzfläche 10 zum darüber liegenden Gasraum, fließt zum Gutstoffableitungsrohr 6 hin und durch dieses ab. Wie bei Anlagen dieser Art an sich bekannt, dienen geeignete Überlaufrohre 12 und 13 dazu, das Niveau zu halten und die an der Oberfläche der Faserstoffsuspension S schwimmenden Anteile abzuziehen. Der besondere Vorteil dabei ist, dass durch die Überlaufrohre die Oberflächenwellen in der Grenzfläche 10 abgeleitet werden. Diese könnten nämlich sonst im durch das Gutstoffableitungsrohr 6 fließenden Suspensionsstrom zu störenden Druckimpulsen im Stoff-Wasser-System und damit auf der Papiermaschine führen. Das Gutstoffableitungsrohr 6 dient dazu, die entlüftete Faserstoffsuspension S in die (bedeutend tiefer liegende) Sammelleitung 8 abzuführen. Es ist unterbrochen gezeichnet und kann relativ lang sein, vorzugsweise eine Höhendifferenz H von über 5 m überbrücken, damit der Druck in der Sammelleitung 8 nicht zu gering wird. Das könnte sonst zu Problemen mit der daran angeschlossenen Pumpe 15 (Fig. 3) führen.

Die Gutstoffleitungen werden in an sich bekannter Weise durch eine Gasabsaugung 11 so weit unter Unterdruck gesetzt, dass die sich darin befindende Suspension zum Sieden kommt. Bekanntlich ist das ein wirksames Mittel die darin enthaltenen Gase, insbesondere Luft, zu entfernen.

Die Zufuhr von Faserstoffsuspension zu den einzelnen Hydrozyklonen erfolgt über eine Anzahl von horizontalen Versorgungsleitungen 4, die bei der in Fig. 1 gezeigten Ausführungsform rechtwinkelig zur Längserstreckung der Gutstoffleitung 5 angeordnet sind. Eine solche Anordnung kann bei den üblichen Platzverhältnissen von Vorteil sein. Es besteht aber auch die Möglichkeit, wie in Fig. 2 gezeigt, die Versorgungsleitungen 4' parallel zur Längserstreckung der Gutstoffleitungen 5 auszurichten. Die Schwerstoffe werden durch Rejektleitungen 9 gemäß Fig. 1 oder Rejektleitungen 9' gemäß Fig. 2 gesammelt und abgeführt. Bei mehrstufigen Hydrozyklonanlagen werden in der Regel die Schwerstoffe einer ersten Stufe gesammelt und in den Einlauf der nachfolgenden zweiten Stufe eingeleitet. Auch bei solchen Schaltungen können erfindungsgemäße Hydrozyklonanlagen von Vorteil sein.

In der Fig. 3 ist eine Hydrozyklonanlage gezeigt, bei der die durch ein Rohrsystem 16 zugeführte Faserstoffsuspension zunächst einer Anzahl von mehreren parallel liegenden Versorgungsleitungen 4 und dann den Hydrozyklonen 1 zugeführt wird. Diese Anlage enthält insgesamt drei Gutstoffleitungen 5 bzw. 5' bzw. 5", die auf derselben geodätischen Höhe und parallel zueinander angeordnet sind. Jede dieser Gutstoffleitungen ist in ihrer axialen Mitte mit einem Gutstoffableitungsrohr 6 bzw. 6' bzw. 6" versehen, wobei diese Gutstoffableitungsrohre in dieselbe Sammelleitung 8 einmünden. Die Sammelleitung 8 kann direkt an den Einlaufstutzen einer Pumpe 15 angeschlossen sein, die den Stoffauflauf einer nicht gezeigten Papiermaschine mit der zur Papiererzeugung benötigten Faserstoffsuspension versorgt.

Es hat sich als günstig gezeigt, die Gutstoffleitung als Rohr mit einem Durchmesser von ca. 1200 mm und einer Länge L von ca. 18 m auszuführen. Angewandt auf ein typisches Beispiel (Volumendurchsatz 108 000 l/min, drei Gutstoffleitungen, 120 Hydrozyklone) bedeutet das eine mittlere Verweilzeit der Suspension in der Gutstoffleitung von ca. 17 s bei einer maximalen Strömungsgeschwindigkeit von ca. 0,53 m/s. Den Durchmesser des Gutstoffableitungsrohres kann man mit Vorteil zu 800 mm und den der Überlaufrohre zu 300 mm wählen.

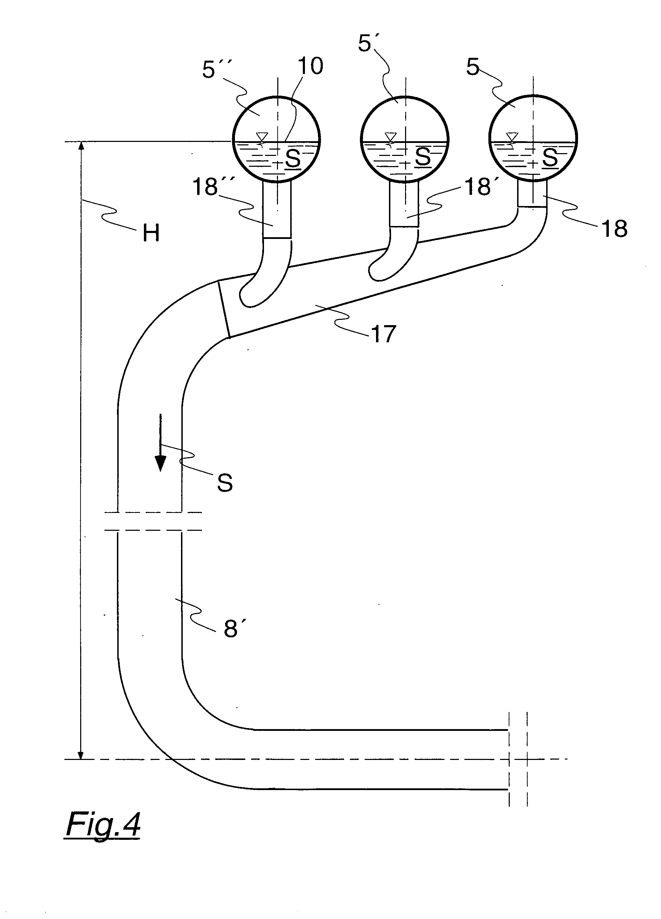

Es gibt verschiedene Möglichkeiten, um die Gutstoffableitungsrohre mit den vorzugsweise bedeutend tiefer liegenden oder teilweise in die Tiefe führenden Sammelleitungen zu verbinden. Während gemäß den Fig. 1 bis 3 jedes Gutstoffableitungsrohr 6 bzw. 6' bzw. 6" separat bis zu einer tief liegenden Sammelleitung 8 geführt wird, besteht auch (s. Fig. 4) die Möglichkeit, die aus mehreren Gutstoffleitungen 5 bzw. 5'bzw. 5" stammenden Gutstoffe auf höherer Ebene, also eher in der Nähe der Gutstoffleitungen über kürzere Gutstoffableitungsrohre 18 bzw. 18' bzw. 18" bereits in einem verbindenden Rohrstück 17 zusammenzuführen und dann in einer über den größten Teil der Höhendifferenz H verlaufenden Sammelleitung 8'abzuleiten. Im Betrieb ist das Rohrstück 17 vollständig mit Flüssigkeit gefüllt, bildet also keine Grenzfläche 10, wie sie in den Gutstoffleitungen 5 bzw. 5' bzw. 5" vorhanden ist. Dadurch unterscheidet es sich wesentlich von einem bekannten Entgasungsbehälter. Das Rohrstück 17 ist mit Vorteil konisch mit sich in Strömungsrichtung erweiterndem Querschnitt ausgeführt. Weiterhin ist es von Vorteil, eine schräge Anordnung, z.B. 15 bis 30 Grad gegenüber der Horizontalen zu wählen.

Die Fig. 4 ist stark vereinfacht gezeichnet, so fehlen z.B. die Hydrozyklone und ihre Anschlüsse.

## Patentansprüche

1. Anlage zur Reinigung und Entgasung einer Faserstoffsuspension (S, S2)
- mit mehreren Hydrozyklonen (1), die je mindestens einen Zulaufanschluss (2), einen Gutstoffanschluss (3) und einen Rejektanschluss (7) für die Schwerstoffe aufweisen,
- mit mindestens zwei Versorgungsleitungen (4, 4') für die Zuführung von Flüssigkeiten in die Hydrozyklone (1) sowie
- mit mindestens zwei Gutstoffleitungen (5, 5', 5") für die Zusammenführung der in den Hydrozyklonen (1) von Schwerstoffen gereinigten Flüssigkeiten, wobei die Gutstoffanschlüsse (3) mehrerer Hydrozyklone (1) an einer Gutstoffleitung (5, 5', 5") angeschlossen sind,
**dadurch gekennzeichnet,**
**dass** an die Gutstoffleitungen (5, 5', 5") jeweils mindestens ein Gutstoffableitungsrohr (6, 6', 6", 18, 18', 18") angeschlossen ist und dass mehrere Gutstoffableitungsrohre (6, 6', 6", 18, 18', 18") stromabwärts direkt in eine weitere Leitung einmünden.

2. Anlage nach Anspruch 1,
**dadurch gekennzeichnet,**
**dass** die Gutstoffableitungsrohre (6, 6', 6") direkt in eine Sammelleitung (8) einmünden.

3. Anlage nach Anspruch 1,
**dadurch gekennzeichnet,**
**dass** die Gutstoffableitungsrohre (18, 18', 18") direkt in ein Rohrstück (17) einmünden und diese in eine Sammelleitung (8').

4. Anlage nach Anspruch 1, 2 oder 3,
**dadurch gekennzeichnet,**
**dass** die Gutstoffleitungen (5, 5', 5"') unter Unterdruck gesetzt werden können.

5. Anlage nach Anspruch 1, 2, 3 oder4,
**dadurch gekennzeichnet,**
**dass** benachbarte Gutstoffleitungen (5, 5', 5") parallel zueinander und auf gleicher geodätischer Höhe angeordnet sind.

6. Anlage nach einem der voranstehenden Ansprüche,
**dadurch gekennzeichnet,**
**dass** die Mitte der Sammelleitung (8, 8') an ihrer tiefsten Stelle gegenüber dem Flüssigkeitsniveau in den Gutstoffleitungen (5, 5', 5") eine geodätische Höhendifferenz (H) von mindestens 5 m, vorzugsweise mindestens 8 m, hat.

7. Anlage nach einem der voranstehenden Ansprüche,
**dadurch gekennzeichnet,**
**dass** die Sammelleitung (8) zu der Pumpe (15) führt, die den Stoffauflauf einer Papiermaschine mit Faserstoffsuspension versorgt.

8. Anlage nach einem der voranstehenden Ansprüche,
**dadurch gekennzeichnet,**
**dass** zwischen Gutstoffleitungen (5, 5', 5") und Sammelleitung (8, 8') kein Entgasungsbehälter zur Trennung einer Gasphase- und einer Flüssigkeitsphase vorhanden ist.

9. Anlage nach einem der voranstehenden Ansprüche,
**dadurch gekennzeichnet,**
**dass** die Gutstoffleitungen (5, 5', 5") Rohrleitungen sind, in deren axialer Mitte die Gutstoffableitungsrohre (6, 6', 6", 18, 18', 18") angeschlossen sind.

10. Anlage nach einem der voranstehenden Ansprüche,
**dadurch gekennzeichnet,**
**dass** die Gutstoffanschlüsse (3) der Hydrozyklone (1) von unten in die Gutstoffleitung (5, 5', 5") eingeführt sind.

11. Anlage nach einem der voranstehenden Ansprüche,
**dadurch gekennzeichnet,**
**dass** die Gutstoffanschlüsse (3) der Hydrozyklone (1) in die Gutstoffleitung (5, 5', 5") oberhalb des Flüssigkeitsniveaus münden.

12. Anlage nach einem der voranstehenden Ansprüche,
**dadurch gekennzeichnet,**
**dass** die Gutstoffrohre (5, 5', 5") miteinander keine Verbindung haben, in der sich im Betrieb eine Grenzfläche zwischen Flüssigkeit und darüber liegendem Gas bildet.

13. Anlage nach einem der voranstehenden Ansprüche,
**dadurch gekennzeichnet,**
**dass** die Hydrozyklone mehrstufig geschaltet sind, indem die Schwerstoffe der ersten Stufe der zweiten Stufe zur Reinigung zugeführt werden.

14. Anlage nach Anspruch 13,
**dadurch gekennzeichnet,**
**dass** die Schwerstoffe der ersten Stufe kontinuierlich abgezogen werden.
